# EUROPEAN PATENT SPECIFICATION

(11) **EP 4 177 380 B1**
(45) Date of publication and mention of the grant of the patent: **06.08.2025**
(21) Application number: 22179361.5
(22) Date of filing: 16.06.2022
(51) Int. Cl.: C25B 1/04, C25B 11/052, C25B 9/23

(54) **MEMBRANE ELECTRODE ASSEMBLY, HYDROGEN PRODUCING DEVICE, METHOD OF PRODUCING CATALYST INK, AND METHOD OF PRODUCING MEMBRANE ELECTRODE ASSEMBLY**
MEMBRAN-ELEKTRODENANORDNUNG, WASSERSTOFFERZEUGUNGSVORRICHTUNG, VERFAHREN ZUR HERSTELLUNG EINER KATALYSATORTINTE UND VERFAHREN ZUR HERSTELLUNG EINER MEMBRAN-ELEKTRODENANORDNUNG
ASSEMBLAGE MEMBRANE-ÉLECTRODE, DISPOSITIF DE PRODUCTION D'HYDROGÈNE, PROCÉDÉ DE PRODUCTION D'ENCRE CATALYTIQUE ET PROCÉDÉ DE PRODUCTION D'UN ASSEMBLAGE MEMBRANE-ÉLECTRODE

(30) Priority: 13.09.2021 JP 2021148400
(43) Date of publication of application: 10.05.2023
(73) Proprietor: SCREEN Holdings Co., Ltd., Kyoto-shi, Kyoto 602-8585 (JP)
(72) Inventor: TAKAGI, Yoshinori, Kyoto 602-8585 (JP)
(74) Representative: Goddar, Heinz J.

(56) References cited:
- EP-A1- 3 199 665
- US-A1- 2004 023 104
- US-A1- 2009 178 931

## Description

### Technical Field

The present invention relates to a membrane electrode assembly, a hydrogen producing device, a method of producing catalyst ink, and a method of producing a membrane electrode assembly.

### Background Art

According to a technique called water electrolysis conventionally known, hydrogen (H₂) is produced through electrolysis of water (H₂O). Several types of water electrolysis are prepared in response to electrolytes to be used. One of these types is solid polymer water electrolysis that uses an ion-exchange membrane (electrolyte membrane) as an electrolyte. The solid polymer water electrolysis uses a cell with catalyst layers formed on both surfaces of the electrolyte membrane. During implementation of the water electrolysis, a voltage is applied between an anode-side catalyst layer and a cathode-side catalyst layer and water is supplied to the anode-side catalyst layer. This causes electrochemical reactions as follows at the anode-side catalyst layer and the cathode-side catalyst layer. As a result, hydrogen is output from the cathode-side catalyst layer.

| | |
|---|---|
| (anode side) | 2H₂O → 4H⁺ + O₂ + 4e⁻ |
| (cathode side) | 2H⁺ + 2e⁻ → H₂ |

The conventional solid polymer water electrolysis is disclosed in Patent Literature 1, for example.

Patent Literature 2 discloses a membrane electrode assembly, comprising an electrode membrane, and a catalyst layer formed on one surface of said electrolyte membrane, wherein said anode catalyst layer includes a catalyst particle, an ionomer and a water-repellent particle.

Patent Literature 3 discloses a catalyst layer, wherein said catalyst layer includes a catalyst particle and an ionomer

### Citation List

### Patent Literature

Patent Literature 1: Japanese Patent Application Laid-Open No. 2019-083085

### Summary of Invention

Patent Literature 2: US 2009/178931 A1
Patent Literature 3: US 2004/023104 A1

### Technical Problem

As described above, according to the solid polymer water electrolysis, oxygen is to be output from the anode-side catalyst layer. This necessitates supply of water and output of oxygen to and from the anode-side catalyst layer. In some cases, during these supply and output, output of oxygen is hindered by the influence of water supplied to the catalyst layer. In such cases, degradation of the performance of outputting oxygen causes a problem that efficiency of hydrogen production through the solid polymer water electrolysis will be reduced.

According to the solid polymer water electrolysis, water filling the anode-side catalyst layer partially leaks to the cathode-side catalyst layer through the electrolyte membrane. Then, the water having entered the cathode-side catalyst layer may hinder output of generated hydrogen. This causes a problem that efficiency of hydrogen output will be reduced.

The present invention has been made in view of the above-described circumstances, and is intended to provide a technique that achieves improvement of the performance of outputting a substance generated in a catalyst layer.

### Solution to Problem

To solve the above-described problem, a first aspect of the present invention is intended for a membrane electrode assembly comprising: an electrolyte membrane; and an anode catalyst layer formed on one surface of the electrolyte membrane, wherein the anode catalyst layer includes a catalyst particle; an ionomer; and a water-repellent particle, and the water-repellent particle is a ceramic particle with a fluorine group or a metallic particle with a fluorine group.

According to a second aspect of the present invention, in the membrane electrode assembly according to the first aspect, the ratio of the water-repellent particle to the catalyst particle is equal to or greater than 2 wt% and equal to or less than 20 wt%.

According to a third aspect of the present invention, in the membrane electrode assembly according to the second aspect, the ratio of the water-repellent particle to the catalyst particle is equal to or greater than 5 wt% and equal to or less than 15 wt%.

According to a fourth aspect of the present invention, in the membrane electrode assembly according to any one of the first to third aspects, the ionomer has an EW value, indicating the dry mass of the ionomer per mol of ion-exchange groups, of equal to or less than 950.

According to a fifth aspect of the present invention, in the membrane electrode assembly according to any one of the first to fourth aspects, the ratio of the ionomer to the catalyst particle is equal to or greater than 8 wt% and equal to or less than 45 wt%.

A sixth aspect of the present invention is intended for a hydrogen producing device that produces hydrogen through solid polymer water electrolysis, comprising the membrane electrode assembly according to anyone of the first to fifth aspects.

An seventh aspect of the present invention is intended for a method of producing catalyst ink to become an anode catalyst layer of a membrane electrode assembly, comprising: a first step of forming a first preparation liquid by blending a catalyst particle and water; a second step of forming a second preparation liquid by adding an alcohol solution to the first preparation liquid; a third step of forming a third preparation liquid by adding a water-repellent particle to the second preparation liquid; and a fourth step of forming a fourth preparation liquid by adding a solution of an ionomer to the third preparation liquid, wherein the water-repellent particle is a ceramic particle with a fluorine group or a metallic particle with a fluorine group.

According to a eighth aspect of the present invention, in the method of producing the catalyst ink according to the seventh aspect, the ratio of the alcohol solution to the catalyst ink is equal to or greater than 15 wt%.

A ninth aspect of the present invention is intended for a method of producing a membrane electrode assembly comprising the step of: applying catalyst ink produced by the producing method according to the seventh or eighth aspect to one surface of an electrolyte membrane and drying the applied catalyst ink, thereby forming the anode catalyst layer.

### Advantageous Effects of Invention

According to the first to sixth aspects of the present invention, adding the water-repellent particle to the anode catalyst layer achieves improvement of the performance of outputting a substance generated in the anode catalyst layer.

In particular, the second aspect of the present invention achieves improvement of the performance of outputting a substance generated in the anode catalyst layer and achieves reduction in the probability of degradation of electrical conductivity in the anode catalyst layer caused by the influence of the fluorine group.

In particular, the third aspect of the present invention achieves further improvement of the performance of outputting a substance generated in the anode catalyst layer and achieves further reduction in the probability of degradation of electrical conductivity in the anode catalyst layer caused by the influence of the fluorine group.

In particular, according to the fourth aspect of the present invention, the number of ion-exchange groups in a polymer chain of the ionomer is increased. This allows oxonium ions to propagate favorably.

In particular, the fifth aspect of the present invention allows the catalyst particle to be covered with the ionomer favorably. Furthermore, the presence of a void left in the anode catalyst layer achieves favorable output of a substance to be generated.

According to the seventh to ninth aspects of the present invention, the water-repellent particle is added to the catalyst ink to become the anode catalyst layer. This achieves improvement of the performance of outputting a substance generated in the anode catalyst layer. Furthermore, the water-repellent particle is added after addition of the alcohol solution. This allows the water-repellent particle to disperse uniformly.

In particular, the eighth aspect of the present invention allows the water-repellent particle to disperse more uniformly.

### Brief Description of Drawings

Fig. 1 is a schematic view of a hydrogen producing device;
Fig. 2 is a schematic view conceptually showing the composition of an anode catalyst layer;
Fig. 3 is a conceptual view of a water-repellent particle;
Fig. 4 is a graph showing a relationship between the quantity of the water-repellent particles added to the anode catalyst layer and voltage characteristics of the hydrogen producing device;
Fig. 5 is a flowchart showing a procedure of producing catalyst ink; and
Fig. 6 is a flowchart showing a procedure of producing a membrane electrode assembly.

### Description of Preferred Embodiments

A preferred embodiment of the present invention will be described below by referring to the drawings.

### <1. Configuration of hydrogen producing device>

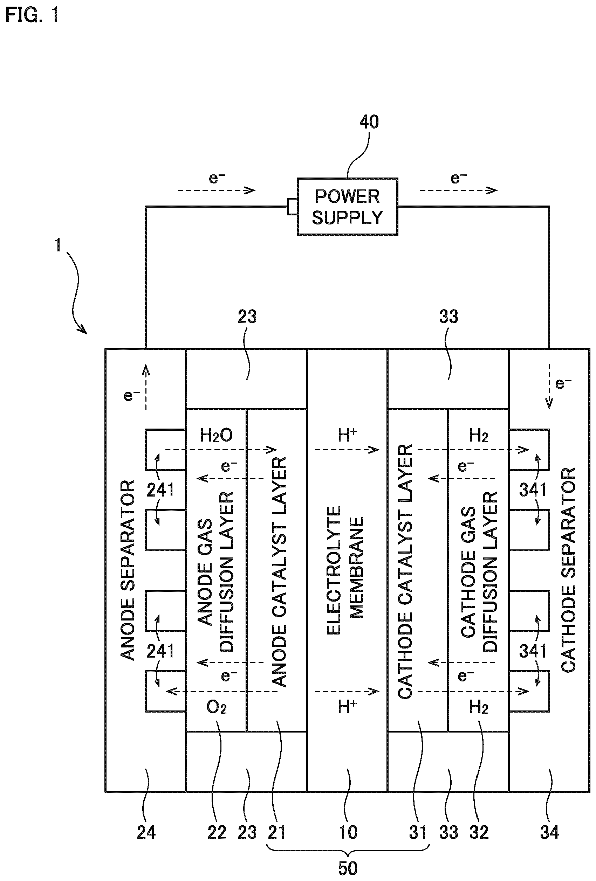

Fig. 1 is a schematic view of a hydrogen producing device 1 according to a preferred embodiment of the present invention. The hydrogen producing device 1 is a device that produces hydrogen through solid polymer water electrolysis. As shown in Fig. 1, the hydrogen producing device 1 includes a cell composed of an electrolyte membrane 10, an anode catalyst layer 21, an anode gas diffusion layer 22, an anode gasket 23, an anode separator 24, a cathode catalyst layer 31, a cathode gas diffusion layer 32, a cathode gasket 33, and a cathode separator 34. Of these layers of the cell, the electrolyte membrane 10, the anode catalyst layer 21, and the cathode catalyst layer 31 form a stack corresponding to a membrane electrode assembly (MEA) 50 according to the preferred embodiment of the present invention.

The electrolyte membrane 10 is a membrane like a thin plate having ion conductivity (ion-exchange membrane). A fluorine-based or hydrocarbon-based polymer electrolyte membrane is used as the electrolyte membrane 10. More specifically, a polymer electrolyte membrane containing perfluorocarbon sulfonic acid is used as the electrolyte membrane 10, for example. The electrolyte membrane 10 has a thickness from 5 to 30 µm, for example.

The anode catalyst layer 21 is a layer functioning as an anode-side electrode. The anode catalyst layer 21 is formed on an anode-side surface of the electrolyte membrane 10. The anode catalyst layer 21 contains a large number of catalyst particles. The catalyst particles are particles of iridium oxide (IrOx), platinum (Pt), an alloy of iridium (Ir) and ruthenium (Ru), or an alloy of iridium (Ir) and titanium dioxide (TiO₂), for example. During use of the hydrogen producing device 1, water (H₂O) is supplied to the anode catalyst layer 21. Then, a voltage is applied between the anode catalyst layer 21 and the cathode catalyst layer 31 from a power supply 40 described later. By doing so, by the actions of the applied voltage and the catalyst particles, the water is electrolyzed into hydrogen ions (H⁺), oxygen (O₂), and electrons (e⁻) in the anode catalyst layer 21.

The composition of the anode catalyst layer 21 will be described later in more detail.

The anode gas diffusion layer 22 is a layer for supplying water uniformly to the anode catalyst layer 21 and for transmitting oxygen and electrons generated in the anode catalyst layer 21 to the anode separator 24. The anode gas diffusion layer 22 is stacked on an outer surface of the anode catalyst layer 21. The anode catalyst layer 21 is interposed between the electrolyte membrane 10 and the anode gas diffusion layer 22. The anode gas diffusion layer 22 has electrical conductivity and is made of a porous material. As an example, carbon paper is used as the anode gas diffusion layer 22.

The anode gasket 23 is a layer for preventing leakage of water and oxygen from the anode catalyst layer 21 and from the anode gas diffusion layer 22 to their surroundings. As shown in Fig. 1, the anode gasket 23 is formed on the anode-side surface of the electrolyte membrane 10 and surrounds the anode catalyst layer 21 and the anode gas diffusion layer 22.

The anode separator 24 is a layer for supplying water to the anode gas diffusion layer 22 and for transmitting electrons coming from the anode catalyst layer 21 through the anode gas diffusion layer 22 to the power supply 40. The anode separator 24 also functions to output oxygen generated in the anode catalyst layer 21 to the outside. The anode separator 24 is formed on an outer surface of the anode gas diffusion layer 22 and on an outer surface of the anode gasket 23. The anode catalyst layer 21, the anode gas diffusion layer 22, and the anode gasket 23 are interposed between the electrolyte membrane 10 and the anode separator 24.

The anode separator 24 has electrical conductivity and is made of a material without permeability to gas. The anode separator 24 is provided with a large number of grooves 241. Water is supplied to the anode gas diffusion layer 22 through the grooves 241 of the anode separator 24. Oxygen generated in the anode catalyst layer 21 passes through the anode gas diffusion layer 22 and is then output to the outside through the grooves 241 of the anode separator 24.

The cathode catalyst layer 31 is a layer functioning as a cathode-side electrode. The cathode catalyst layer 31 is formed on a cathode-side surface of the electrolyte membrane 10 (a surface on the opposite side to the anode catalyst layer 21). The cathode catalyst layer 31 contains a large number of carbon particles on which catalyst particles are supported. The catalyst particles are particles of platinum, for example. Alternatively, the catalyst particles may be prepared by mixing a tiny amount of ruthenium or cobalt particles into particles of platinum. During use of the hydrogen producing device 1, hydrogen ions (H⁺) and electrons (e⁻) are supplied to the cathode catalyst layer 31. Then, a voltage is applied between the anode catalyst layer 21 and the cathode catalyst layer 31 by the power supply 40 described later. By doing so, by the actions of the applied voltage and the catalyst particles, a reduction reaction is caused in the cathode catalyst layer 31 to generate hydrogen gas (H₂) from the hydrogen ions and the electrons.

The cathode gas diffusion layer 32 is a layer for transmitting electrons from the cathode separator 34 to the cathode catalyst layer 31 and for transmitting hydrogen generated in the cathode catalyst layer 31 to the cathode separator 34. The cathode gas diffusion layer 32 is stacked on an outer surface of the cathode catalyst layer 31. The cathode catalyst layer 31 is interposed between the electrolyte membrane 10 and the cathode gas diffusion layer 32. The cathode gas diffusion layer 32 has electrical conductivity and is made of a porous material. As an example, carbon paper is used as the cathode gas diffusion layer 32.

The cathode gasket 33 is a layer for preventing leakage of hydrogen from the cathode catalyst layer 31 and from the cathode gas diffusion layer 32 to their surroundings. As shown in Fig. 1, the cathode gasket 33 is formed on the cathode-side surface of the electrolyte membrane 10 and surrounds the cathode catalyst layer 31 and the cathode gas diffusion layer 32.

The cathode separator 34 is a layer for transmitting electrons supplied from the power supply 40 to the cathode gas diffusion layer 32 and for outputting generated hydrogen to the outside. The cathode separator 34 is formed on an outer surface of the cathode gas diffusion layer 32 and on an outer surface of the cathode gasket 33. The cathode catalyst layer 31, the cathode gas diffusion layer 32, and the cathode gasket 33 are interposed between the electrolyte membrane 10 and the cathode separator 34. The cathode separator 34 has electrical conductivity and is made of a material without permeability to gas. The cathode separator 34 is provided with a large number of grooves 341. Hydrogen from the cathode gas diffusion layer 32 passes through the grooves 341 and is then output to the outside.

The power supply 40 is connected between the anode separator 24 and the cathode separator 34. More specifically, the power supply 40 has a positive terminal electrically connected to the anode separator 24. The power supply 40 has a negative terminal electrically connected to the cathode separator 34. The power supply 40 applies a voltage necessary for electrolysis of water between the anode separator 24 and the cathode separator 34.

During use of the hydrogen producing device 1, water is supplied from the anode separator 24 to the anode catalyst layer 21 through the anode gas diffusion layer 22. Then, by the actions of a voltage applied from the power supply 40 and the catalyst parties in the anode catalyst layer 21, water is decomposed into hydrogen ions, oxygen, and electrons. The hydrogen ions propagate through the electrolyte membrane 10 into the cathode catalyst layer 31. The oxygen passes through the anode gas diffusion layer 22 and the anode separator 24 and is then output to the outside. The electrons pass through the anode gas diffusion layer 22, the anode separator 24, the power supply 40, the cathode separator 34, and the cathode gas diffusion layer 32 and then flow into the cathode catalyst layer 31. Next, at the cathode catalyst layer 31, the hydrogen ions and the electrons are combined with each other to generate hydrogen. The generated hydrogen passes through the cathode gas diffusion layer 32 and the cathode separator 34 and is then output to the outside. In this way, hydrogen is produced.

### <2. Composition of anode catalyst layer>

The composition of the above-described anode catalyst layer 21 will be described next in more detail.

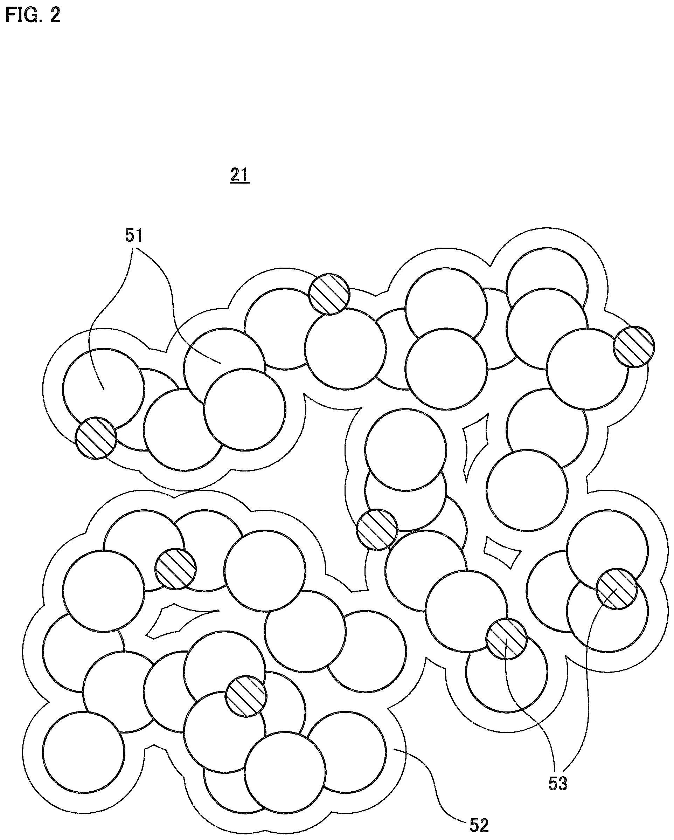

Fig. 2 is a schematic view conceptually showing the composition of the anode catalyst layer 21. As shown in Fig. 2, the anode catalyst layer 21 includes multiple catalyst particles 51, an ionomer 52, and multiple water-repellent particles 53.

The catalyst particles 51 are particles for causing electrolysis of water. For example, the catalyst particles 51 are made of iridium oxide, platinum, an alloy of iridium and ruthenium, or an alloy of iridium and titanium dioxide.

The ionomer 52 is an electrolyte polymer covering the catalyst particles 51. The ionomer 52 functions to transport hydrogen ions generated through electrolysis of water in the anode catalyst layer 21. For example, nafion (perfluorocarbon sulfonic acid) is used as the ionomer 52. The ionomer 52 has a polymer chain with an ion-exchange group such as a sulfone group. The hydrogen ions are combined with water in the cathode catalyst layer 31 to become oxonium ions (H₃O⁺). These oxonium ions propagate through the ion-exchange group of the ionomer 52.

For favorable propagation of the oxonium ions, it is desirable to prepare a large number of ion-exchange groups in the polymer chain of the ionomer 52. More specifically, it is desirable that an EW value indicating the dry mass of the ionomer 52 per mol of ion-exchange groups (the reciprocal of the number of ion-exchange groups per unit mass of the ionomer 52) will be set equal to or less than 950. For example, the EW value is desirably set equal to or greater than 650 and equal to or less than 950.

If the ratio of the ionomer 52 to the catalyst particles 51 is too small, it becomes impossible to cover the catalyst particles 51 with the ionomer 52 sufficiently. This makes it difficult for oxonium ions to propagate through the ionomer 52 favorably. On the other hand, if the ratio of the ionomer 52 to the catalyst particles 51 is too large, voids in the cathode catalyst layer 31 are reduced. This becomes hindrance to diffusion of water in the anode catalyst layer 21 or to output of oxygen generated in the anode catalyst layer 21.

Thus, the ratio of the ionomer 52 to the catalyst particles 51 is desirably set to a ratio that allows the catalyst particles 51 to be covered with the ionomer 52 favorably, and achieves favorable diffusion of water and favorable output of oxygen. More specifically, the ratio (ratio by weight) of the ionomer 52 to the catalyst particles 51 is desirably set equal to or greater than 8 wt% and equal to or less than 45 wt%. More desirably, the ratio of the ionomer 52 (ratio by weight) to the catalyst particles 51 is set equal to or greater than 10 wt% and equal to or less than 25 wt%.

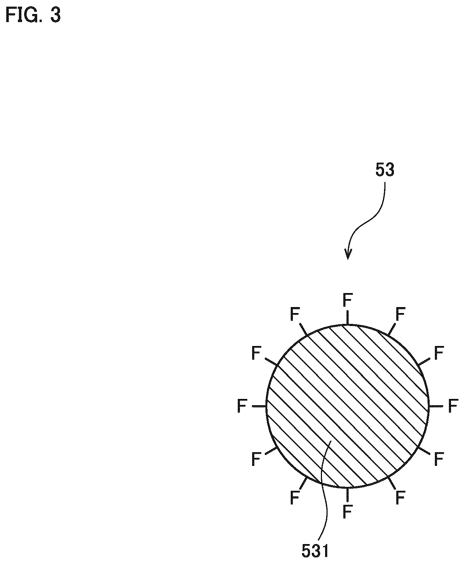

The water-repellent particles 53 are additives for improving the performance of outputting oxygen generated in the anode catalyst layer 21. Fig. 3 is a conceptual view of the water-repellent particle 53. As shown in Fig. 3, the water-repellent particle 53 is composed of a body particle 531, and multiple fluorine groups (F) with water repellency provided on a surface of the body particle 531. The body particle 531 is a ceramic particle or a metallic particle, for example. The ceramic particle is a particle of titanium oxide (TiO₂), for example. The metallic particle is a particle of a noble metal such as platinum (Pt), silver (Ag), or gold (Au), for example. The water-repellent particle 53 has a diameter of equal to or greater than 2 nm and equal to or less than 500 nm, for example.

The anode catalyst layer 21 contains water and receives a high voltage of about 2 V. Thus, if a carbon particle is used as the body particle 531, oxidation of carbon (electron emission) proceeds in parallel with electrolysis. More specifically, a chemical reaction expressed by the following formula occurs to unintentionally cause disappearance of carbon (C). For this reason, it is desirable to avoid use of carbon and to use a ceramic particle or a metallic particle as the body particle 531 as described above.

C + H₂O → CO + 2H⁺ + 2e⁻

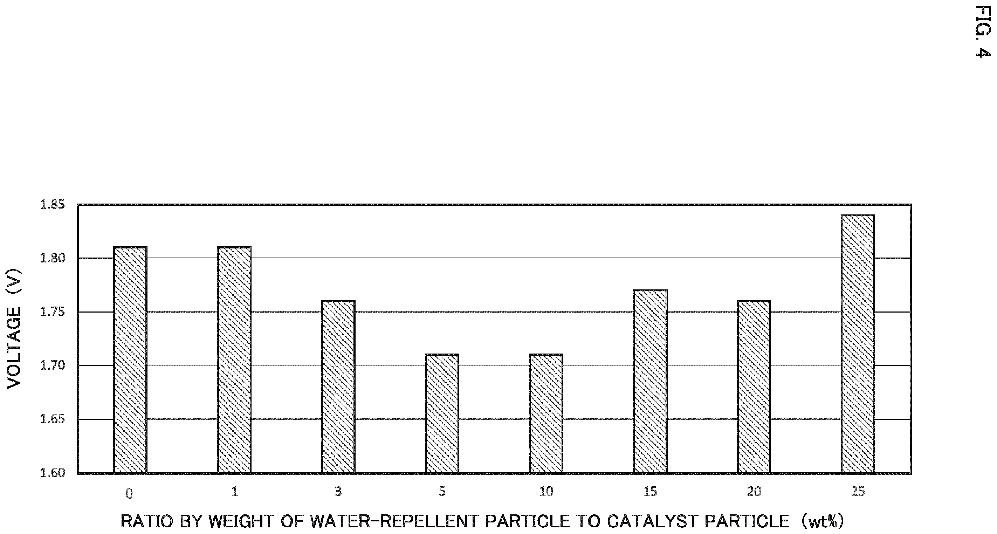

Fig. 4 is a graph showing a relationship between the quantity of the water-repellent particles 53 added to the anode catalyst layer 21 and voltage characteristics of the hydrogen producing device 1. In the graph of Fig. 4, a horizontal axis shows the ratio (ratio by weight) of the water-repellent particles 53 to the catalyst particles 51. A vertical axis shows a voltage value to be applied from the power supply 40 for generating hydrogen of a predetermined amount. The voltage value shown in the graph of Fig. 4 is determined at a current density of 2.0 A/cm².

**In** response to addition of the water-repellent particles 53 to the anode catalyst layer 21, water in the anode catalyst layer 21 is repelled by the water-repelling action of the fluorine groups. This reduces a likelihood that movement of oxygen generated in the anode catalyst layer 21 will be hindered by water. Thus, it becomes possible to output oxygen efficiently from the anode catalyst layer 21. Improving the performance of outputting oxygen facilitates electrolysis of water further in the anode catalyst layer 21.

Furthermore, adding the water-repellent particles 53 to the anode catalyst layer 21 reduces a likelihood that water in the anode catalyst layer 21 will enter the cathode catalyst layer 31 through the electrolyte membrane 10. Thus, movement of hydrogen generated in the cathode catalyst layer 31 becomes less prone to hindrance by water. As a result, it becomes possible to output hydrogen efficiently from the cathode catalyst layer 31.

As shown in Fig. 4, as a result of the above-described actions, adding the water-repellent particles 53 to the anode catalyst layer 21 makes it possible to reduce a voltage value to be applied from the power supply 40 compared to a case in the absence of addition of the water-repellent particles 53. Specifically, this achieves improvement of the efficiency of producing hydrogen through solid polymer water electrolysis.

However, if the quantity of the added water-repellent particles 53 is too large, the fluorine groups having insulating properties exert influence to increase an electrical resistance in the anode catalyst layer 21. Hence, like in a case shown in Fig. 4 where the ratio by weight of the water-repellent particles 53 to the catalyst particles 51 is 25 wt%, this conversely increases a voltage value to be applied from the power supply 40.

Thus, it is desirable that the water-repellent particles 53 will be added to a quantity with which the performance of outputting oxygen generated in the anode catalyst layer 21 can be improved and the probability of degradation of electrical conductivity in the anode catalyst layer 21 caused by the influence of the fluorine groups can be reduced. More specifically, the ratio (ratio by weight) of the water-repellent particles 53 to the catalyst particles 51 is desirably set equal to or greater than 2 wt% and equal to or less than 20 wt%. More desirably, the ratio (ratio by weight) of the water-repellent particles 53 to the catalyst particles 51 is set equal to or greater than 5 wt% and equal to or less than 15 wt%. For example, the ratio (ratio by weight) of the water-repellent particles 53 to the catalyst particles 51 is preferably set to 10 wt%.

As described above, in the anode catalyst layer 21, hydrogen ions are combined with water to propagate as oxonium ions. Thus, for increasing the efficiency of propagation of the hydrogen ions, moisture of a certain degree is desirably retained uniformly in the anode catalyst layer 21. However, too much moisture hinders the performance of outputting oxygen generated in the anode catalyst layer 21. For this reason, it is desirable to optimize a moisture content to be retained in the anode catalyst layer 21.

In this regard, reducing the above-described EW value of the ionomer 52 contributes to increasing a moisture content in the anode catalyst layer 21. On the other hand, adding the water-repellent particles 53 contributes to reducing a moisture content in the anode catalyst layer 21. Thus, by setting the EW value of the ionomer 52 to be equal to or less than 950 and by adding the water-repellent particles 53 as described above, it becomes possible to keep a moisture content retained in the anode catalyst layer 21 within an appropriate range. This achieves further improvement of the efficiency of producing hydrogen through solid polymer water electrolysis.

### <3. Procedure of producing catalyst ink>

The anode catalyst layer 21 is formed by applying catalyst ink in paste form on a surface of the electrolyte membrane 10. The following describes a method of producing the catalyst ink to become the anode catalyst layer 21.

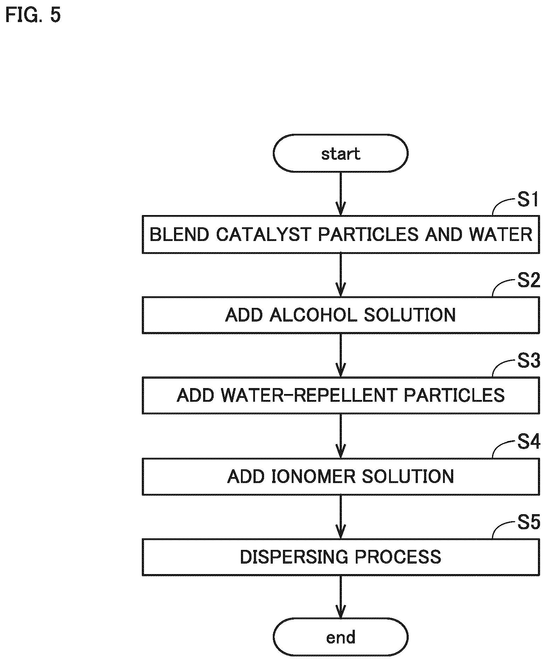

Fig. 5 is a flowchart showing a procedure of producing the catalyst ink. As shown in Fig, 5, for producing the catalyst ink, the catalyst particles 51 and water are first blended to form a first preparation liquid (first step S1). In the first step S1, the water is added to prevent the catalyst particles 51 from catching fire.

Next, an alcohol solution is added to the first preparation liquid to form a second preparation liquid (second step S2). The alcohol solution is methanol, ethanol, 1-propanol, or 2-propanol, for example.

Next, the water-repellent particles 53 are added to the second preparation liquid to form a third preparation liquid (third step S3). The water-repellent particles 53 are ceramic particles with fluorine groups or metallic particles with fluorine groups. In the third step S3, the water-repellent particles 53 disperse in the alcohol solution added in the second step S2.

Adding the water-repellent particles 53 in the above-described first step S1 makes it likely that the water-repellent particles 53 will form lumps as a result of being prevented from dispersing in the first preparation liquid by the water-repelling action of the fluorine groups. By contrast, according to the present preferred embodiment, the alcohol solution having a small angle of contact (having high compatibility with the water-repellent particles 53) is added in advance in the second step S2, and then the water-repellent particles 53 are added in the third step S3. This allows the water-repellent particles 53 to disperse uniformly in the third preparation liquid.

Next, an ionomer solution is added to the third preparation liquid to form a fourth preparation liquid (fourth step S4). The ionomer solution is a solution prepared by dissolving the ionomer 52 in water and alcohol. The ionomer solution has a high proportion of water, so that it is added after the water-repellent particles 53 are added and disperse in the third step S3.

Next, dispersing process is performed further on the fourth preparation liquid (fifth step S5). In the fifth step S5, the fourth preparation liquid is agitated, for example. This causes the water-repellent particles 53 to disperse more uniformly in the fourth preparation liquid. As a result, the catalyst ink is generated. The ratio (ratio by weight) of the alcohol solution to the catalyst ink finally generated is desirably set equal to or greater than 15 wt%. This allows the water-repellent particles 53 to disperse with still higher performance in the catalyst ink.

### <4. Method of producing membrane electrode assembly>

A method of producing the membrane electrode assembly 50 using the above-described catalyst ink will be described next.

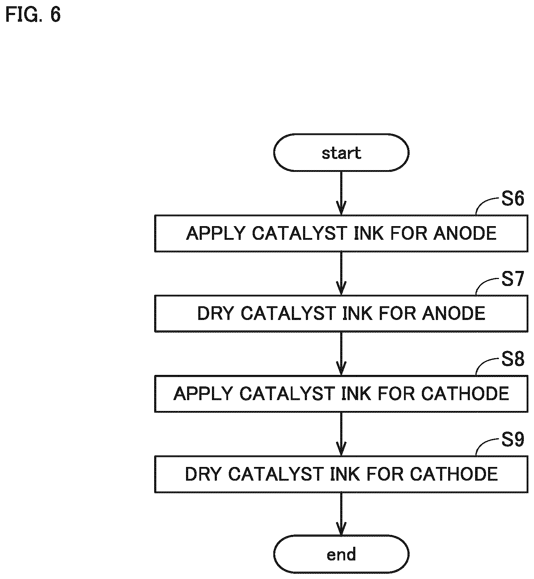

Fig. 6 is a flowchart showing a procedure of producing the membrane electrode assembly 50. As shown in Fig. 6, for producing the membrane electrode assembly 50, the catalyst ink for anode produced by the above-described procedure is applied to one of the surfaces of the electrolyte membrane 10 (sixth step S6). Then, the applied catalyst ink is dried (seventh step S7). By doing so, the anode catalyst layer 21 is formed on the one surface of the electrolyte membrane 10.

Furthermore, catalyst ink for cathode is applied to the other surface of the electrolyte membrane 10 (eighth step S8). Then, the applied catalyst ink is dried (ninth step S9). By doing so, the cathode catalyst layer 31 is formed on the other surface of the electrolyte membrane 10. As a result, the membrane electrode assembly 50 composed of the electrolyte membrane 10, the anode catalyst layer 21, and the cathode catalyst layer 31 is obtained.

Order of implementation may be reversed between formation of the anode catalyst layer 21 including the sixth step S6 and the seventh step S7 and formation of the cathode catalyst layer 31 including the eighth step S8 and the ninth step S9.

### Reference Signs List

- 1: Hydrogen producing device
- 10: Electrolyte membrane
- 21: Anode catalyst layer
- 22: Anode gas diffusion layer
- 23: Anode gasket
- 24: Anode separator
- 25: Anode electrode
- 31: Cathode catalyst layer
- 32: Cathode gas diffusion layer
- 33: Cathode gasket
- 34: Cathode separator
- 40: Power supply
- 50: Membrane electrode assembly
- 51: Catalyst particle
- 52: Ionomer
- 53: Water-repellent particle
- 241: Groove of anode separator
- 341: Groove of cathode separator
- 531: Body particle

## Claims

1. A membrane electrode assembly (50) comprising:
an electrolyte membrane (10); and
an anode catalyst layer (21) formed on one surface of said electrolyte membrane (10), wherein
said anode catalyst layer (21) includes:
a catalyst particle (51);
an ionomer (52); and
a water-repellent particle (53), and
said water-repellent particle (53) is a ceramic particle with a fluorine group or a metallic particle with a fluorine group.

2. The membrane electrode assembly (50) according to claim 1, wherein
the ratio of said water-repellent particle (53) to said catalyst particle (51) is equal to or greater than 2 wt% and equal to or less than 20 wt%.

3. The membrane electrode assembly (50) according to claim 2, wherein
the ratio of said water-repellent particle (53) to said catalyst particle (51) is equal to or greater than 5 wt% and equal to or less than 15 wt%.

4. The membrane electrode assembly (50) according to any one of claims 1 to 3, wherein
said ionomer (52) has an EW value, indicating the dry mass of the ionomer per mol of ion-exchange groups, of equal to or less than 950.

5. The membrane electrode assembly (50) according to any one of claims 1 to 4, wherein
the ratio of said ionomer (52) to said catalyst particle (51) is equal to or greater than 8 wt% and equal to or less than 45 wt%.

6. A hydrogen producing device (1) that produces hydrogen through solid polymer water electrolysis, comprising:
the membrane electrode assembly (50) according to any one of claims 1 to 5.

7. A method of producing catalyst ink to become an anode catalyst layer (21) of a membrane electrode assembly (50), comprising:
a first step (S1) of forming a first preparation liquid by blending a catalyst particle (51) and water;
a second step (S2) of forming a second preparation liquid by adding an alcohol solution to said first preparation liquid;
a third step (S3) of forming a third preparation liquid by adding a water-repellent particle (53) to said second preparation liquid; and
a fourth step (S4) of forming a fourth preparation liquid by adding a solution of an ionomer (52) to said third preparation liquid, wherein
said water-repellent particle (53) is a ceramic particle with a fluorine group or a metallic particle with a fluorine group.

8. The method of producing the catalyst ink according to claim 7, wherein
the ratio of said alcohol solution to said catalyst ink is equal to or greater than 15 wt%.

9. A method of producing a membrane electrode assembly (50) comprising the step of:
applying catalyst ink produced by the producing method according to claim 7 or 8 to one surface of an electrolyte membrane (10) and drying the applied catalyst ink, thereby forming said anode catalyst layer (21).

## Patentansprüche

1. Membran-Elektrodenanordnung (50), umfassend:
eine Elektrolytmembran (10); und
eine Anodenkatalysatorschicht (21), die auf einer Oberfläche der Elektrolytmembran (10) ausgebildet ist, wobei
die Anodenkatalysatorschicht (21) enthält:
ein Katalysatorpartikel (51);
ein Ionomer (52); und
ein wasserabweisendes Partikel (53), und
das wasserabweisende Partikel (53) ein Keramikpartikel mit einer Fluorgruppe oder ein Metallpartikel mit einer Fluorgruppe ist.

2. Membran-Elektrodenanordnung (50) nach Anspruch 1, wobei
das Verhältnis des wasserabweisenden Partikels (53) zu dem Katalysatorpartikel (51) gleich oder größer als 2 Gew.-% und gleich oder kleiner als 20 Gew.-% ist.

3. Membran-Elektrodenanordnung (50) nach Anspruch 2, wobei
das Verhältnis des wasserabweisenden Partikels (53) zu dem Katalysatorpartikel (51) gleich oder größer als 5 Gew.-% und gleich oder kleiner als 15 Gew.-% ist.

4. Membran-Elektrodenanordnung (50) nach einem der Ansprüche 1 bis 3, wobei
das Ionomer (52) einen EW-Wert, der die Trockenmasse des Ionomers pro Mol Ionenaustauschgruppen angibt, von gleich oder kleiner als 950 aufweist.

5. Membran-Elektrodenanordnung (50) nach einem der Ansprüche 1 bis 4, wobei
das Verhältnis des Ionomers (52) zu dem Katalysatorpartikel (51) gleich oder größer als 8 Gew.-% und gleich oder kleiner als 45 Gew.-% ist.

6. Wasserstofferzeugungsvorrichtung (1), die Wasserstoff durch Festpolymer-Wasserelektrolyse erzeugt, umfassend:
die Membran-Elektrodenanordnung (50) nach einem der Ansprüche 1 bis 5.

7. Verfahren zur Herstellung einer Katalysatortinte, um eine Anodenkatalysatorschicht (21) einer Membran-Elektrodenanordnung (50) zu werden, umfassend:
einen ersten Schritt (S1) des Bildens einer ersten Zubereitungsflüssigkeit durch Mischen eines Katalysatorpartikels (51) und Wasser;
einen zweiten Schritt (S2) des Bildens einer zweiten Zubereitungsflüssigkeit durch Zugeben einer Alkohollösung zu der ersten Zubereitungsflüssigkeit;
einen dritten Schritt (S3) des Bildens einer dritten Zubereitungsflüssigkeit durch Zugeben eines wasserabweisenden Partikels (53) zu der zweiten Zubereitungsflüssigkeit; und
einen vierten Schritt (S4) des Bildens einer vierten Zubereitungsflüssigkeit durch Zugeben einer Lösung eines Ionomers (52) zu der dritten Zubereitungsflüssigkeit, wobei
das wasserabweisende Partikel (53) ein Keramikpartikel mit einer Fluorgruppe oder ein Metallpartikel mit einer Fluorgruppe ist.

8. Verfahren zur Herstellung der Katalysatortinte nach Anspruch 7, wobei
das Verhältnis der Alkohollösung zu der Katalysatortinte gleich oder größer als 15 Gew.-% ist.

9. Verfahren zur Herstellung einer Membran-Elektrodenanordnung (50), umfassend den Schritt:
Aufbringen einer durch das Herstellungsverfahren nach Anspruch 7 oder 8 hergestellten Katalysatortinte auf eine Oberfläche einer Elektrolytmembran (10) und Trocknen der aufgebrachten Katalysatortinte, wodurch die Anodenkatalysatorschicht (21) ausgebildet wird.

## Revendications

1. Assemblage membrane-électrode (50) comprenant :
une membrane électrolytique (10) ; et
une couche de catalyseur d'anode (21) formée sur une surface de ladite membrane électrolytique (10), dans lequel
ladite couche de catalyseur d'anode (21) inclut :
une particule de catalyseur (51) ;
un ionomère (52) ; et
une particule hydrophobe (53), et
ladite particule hydrophobe (53) est une particule de céramique ayant un groupe fluor ou une particule métallique ayant un groupe fluor.

2. Assemblage membrane-électrode (50) selon la revendication 1, dans lequel
le rapport de ladite particule hydrophobe (53) à ladite particule de catalyseur (51) est égal ou supérieur à 2 % en poids et égal ou inférieur à 20 % en poids.

3. Assemblage membrane-électrode (50) selon la revendication 2, dans lequel
le rapport de ladite particule hydrophobe (53) à ladite particule de catalyseur (51) est égal ou supérieur à 5 % en poids et égal ou inférieur à 15 % en poids.

4. Assemblage membrane-électrode (50) selon l'une quelconque des revendications 1 à 3, dans lequel
ledit ionomère (52) a une valeur EW, indiquant la masse sèche de l'ionomère par mol de groupes échangeurs d'ions, égale ou inférieure à 950.

5. Assemblage membrane-électrode (50) selon l'une quelconque des revendications 1 à 4, dans lequel
le rapport dudit ionomère (52) à ladite particule de catalyseur (51) est égal ou supérieur à 8 % en poids et égal ou inférieur à 45 % en poids.

6. Dispositif de production d'hydrogène (1) qui produit de l'hydrogène par l'électrolyse de l'eau à polymère solide, comprenant :
l'assemblage membrane-électrode (50) selon l'une quelconque des revendications 1 à 5.

7. Procédé de production d'encre catalytique pour devenir une couche de catalyseur d'anode (21) d'un assemblage membrane-électrode (50), comprenant :
une première étape (S1) de formation d'un premier liquide de préparation en mélangeant une particule de catalyseur (51) et de l'eau ;
une deuxième étape (S2) de formation d'un deuxième liquide de préparation en ajoutant une solution d'alcool audit premier liquide de préparation ;
une troisième étape (S3) de formation d'un troisième liquide de préparation en ajoutant une particule hydrophobe (53) audit deuxième liquide de préparation ; et
une quatrième étape (S4) de formation d'un quatrième liquide de préparation en ajoutant une solution d'un ionomère (52) audit troisième liquide de préparation, dans lequel
ladite particule hydrophobe (53) est une particule de céramique ayant un groupe fluor ou une particule métallique ayant un groupe fluor.

8. Procédé de production de l'encre catalytique selon la revendication 7, dans lequel
le rapport de ladite solution d'alcool à ladite encre catalytique est égal ou supérieur à 15 % en poids.

9. Procédé de production d'un assemblage membrane-électrode (50) comprenant l'étape consistant à :
appliquer une encre catalytique produite par le procédé de production selon la revendication 7 ou 8 à une surface d'une membrane électrolytique (10) et sécher l'encre catalytique appliquée, formant ainsi ladite couche de catalyseur d'anode (21).
